# EUROPEAN PATENT SPECIFICATION

(11) **EP 4 063 191 B1**
(45) Date of publication and mention of the grant of the patent: **03.01.2024**
(21) Application number: 21165166.6
(22) Date of filing: 26.03.2021
(51) Int. Cl.: B60N 2/66

(54) **LUMBAR SUPPORT**
LUMBALSTÜTZE
SUPPORT LOMBAIRE

(43) Date of publication of application: 28.09.2022
(73) Proprietor: FICO CABLES LDA, 4470-263 Vermoim-Maia (PT)
(72) Inventor: DE CASTRO FARIA, Manuel António, 4470-263 Vermoim-Maia (PT); GONCALVES SILVA, David Manuel, 4470-263 Vermoim-Maia (PT)
(74) Representative: Bardehle Pagenberg Partnerschaft mbB Patentanwälte Rechtsanwälte

(56) References cited:
- WO-A1-2013/015474
- US-B2- 8 544 954

## Description

### 1. Technical field

The invention relates to a lumbar support for the backrest of a vehicle seat. Particularly the invention relates to a lumbar support that can electrically adjust the position within the backrest and curvature thereof.

### 2. Prior art

From the prior art a variety of lumbar supports are known. A lumbar support enables to adjust the shape of the backrest of a vehicle seat in the lumbar or lordosis area to adapt the backrest to the comfort needs of the occupant of the seat.

More advanced lumbar supports allow an adjustment of the position, i.e. the height of the lumbar support with respect to the backrest of the seat and an adjustment of the curvature, i.e, the thickness or shape of the lumbar support.

Some of the lumbar supports are manually adjusted by levers or rotating knobs that can be actuated manually by the user. Other lumbar supports use electric motors for the adjustment of the lumbar support's position and curvature.

For example, the prior art document EP 2 471 414 B1 discloses an adjusting device for a lumbar support, wherein position and curvature of the lumbar support are adjusted by electric motors. The lumbar support adjusting device comprises a pair of spaced guide members, and two adjusting members, individually coupled to the pair of guide members to be displaceable along said pair of guide members. A first drive mechanism effects a positional adjustment of the lumbar support by displacing the first adjusting member along the guide members. A second drive mechanism effects a curvature adjustment by displacing the second adjusting member along the guide members and relative to the first adjusting member.

Although such lumbar supports are generally functional there is still the need for improvements in terms of reliability, ease of assembly and customization to user's needs.

### 3. Summary of the invention

The above-mentioned need is solved by a lumbar support according to claim 1.

Particularly, the above-mentioned need is solved by a lumbar support for the backrest of a vehicle seat comprising a wire structure, having a pair of wire guide members, for mounting the lumbar support within the vehicle seat; a main plate, supported by the wire guide members, wherein the main plate is linearly movable with respect to the wire guide members; a position drive mechanism, for linearly moving the main plate with respect to the wire structure, wherein the main drive mechanism comprises a position electric motor which is mounted to the main plate; a curvature drive mechanism, comprising an adjusting member, wherein the adjusting member is supported by the main plate and movable with respect to the main plate; at least one arching element suspended between the main plate and the adjusting member; and a curvature electric motor mounted to the main plate, for adjusting the curvature of the at least one arching element, wherein the curvature drive mechanism is supported only by the main plate.

Such a lumbar support can be electrically adjusted in position and curvature and thus can be perfectly adjusted to the comfort needs of the occupant. Further, since the electric motors are mounted to the main plate, there are no external adjusters to be provided and mounted to the seat frame. This reduces the overall space consumption and the mounting effort for the lumbar support to the seat frame. Further, since adjusting member is supported by the main plate and the at least one arching element is suspended between the main plate and the adjusting member, all elements for the curvature adjustment are mounted to the main plate, and not to the pair of wire guide members, as in the prior art. This allows a wire guide member independent adjustment of the at least one arching element, such that the adjustment characteristics of the arching element can be customized to different needs. Further, the actuation elements for the arching element can be optimized in order to minimize the contact surfaces and this way reduce actuation efforts compared to the prior art, where friction is determined by the contact between the adjusting member and the wire guide members, when the adjusting member is displaceable along said pair of guide members. This is particularly important, since the wire guide members are subjected to bending during use, what makes it difficult to support movable parts to it and increases friction. Further, this arrangement of the curvature adjustment elements on the main plate excludes that something, like wires or cushioning, is trapped between moving elements and blocks the curvature drive mechanism, as it might be the case with the above mentioned prior art. Further, since the adjusting member is movably supported by the main plate, the movement path of the adjusting member can be chosen independently from the movement of the main plate relative to the wire guide members. This allows to design the movement path of the adjusting member such that a desired actuation characteristics for the arching elements is given.

Preferably, the at least one arching element comprises a first end and a second end, wherein the first end attached to the main plate and the second end is attached to the adjusting member.

Preferably, the adjusting member is movably supported by the main plate to be movable linearly and in parallel with respect to the movement of the main plate; or linearly and inclined by an angle α with respect to the movement of the main plate; or on a curved track with respect to the movement of the main plate; or on a curved exponential track with respect to the movement of the main plate. Thus, the arching elements, connected to and actuated by the adjusting member, can adopt different actuation shapes as desired for the particular vehicle seat and/or the actuation speed can be increased since the arching elements can be actuated to the same height or shape by a smaller movement stroke of the adjusting member.

Preferably, the adjusting member has a substantially T-shape. A T-shape is particularly favorable for actuating two arching elements by one drive mechanism as it distributes the actuation forces equally to the two arching elements equally.

Preferably, the lumbar support comprises two arching elements, namely a left arching element and a right arching element, wherein the left and right arching elements are supported by the main plate and the adjusting member to be in parallel to each other, and wherein the left and right arching elements are supported by the main plate at first ends thereof and are commonly actuated by the adjusting member at second ends thereof. Two arching elements allow a good but resilient force introduction into a flexible lumbar plate, which bends corresponding to the arching elements, within the backrest of the vehicle seat.

Preferably, the position drive mechanism as a first alternative comprises a position toothed rack that is movably supported by the main plate and driven by the position electric motor. An actuation via an electrically driven position toothed rack is easy to assemble compared to any spindle mechanism of a second embodiment and very failure-proof.

Preferably, the wire structure further comprises at least one mounting element connected to the wire structure, and the position drive mechanism further comprises at least one connection link for connecting the position toothed rack with the at least one mounting element. The mounting element provides a fixed point at the lumbar support for moving the main plate relative to the guide members up and down, i.e. change the position of the lumbar support within the backrest of the vehicle seat. The connection link may be a substantially stiff plastic element that is able to transmit pulling and pushing forces from the position toothed rack to the mounting element, to hold the position toothed rack in place. The position toothed rack can also be integral with the connection link, for example a commonly injection molded plastic part.

Preferably, the wire structure comprises two mounting elements connected to the wire structure, and the curvature drive mechanism comprises an upper flexible wire, connecting the position toothed rack with the first mounting element, and a lower flexible wire connecting the position toothed rack with the second mounting element.

Preferably, the first mounting element extends between and connects the left wire guide member with the right wire guide member; and/or the second mounting element is connected to a lower wire element of the wire structure.

Preferably, the position drive mechanism as a second alternative comprises a position spindle and a position spindle nut cooperating with the position spindle; wherein the position spindle nut is rotatably supported and held in place by the main plate, wherein the position spindle nut is rotatably driven by the position electric motor; and the position spindle is arranged stationary with respect to the wire structure.

Preferably, the wire structure further comprises at least one mounting element connected to the wire structure, wherein the position spindle with one end thereof, is non-rotatably connected to the mounting element.

Preferably, the wire structure comprises two mounting elements connected to the wire structure, namely a first mounting element and a second mounting element, wherein the position spindle with one end thereof, is non-rotatably connected to the first mounting element and the position spindle with the other end thereof, is non-rotatably connected to the second mounting element.

Preferably, the curvature drive mechanism as a first alternative comprises a curvature toothed rack, which is movably supported by the main plate and driven by the curvature electric motor, wherein the curvature toothed rack is connected to and drives the adjusting member.

Preferably, the curvature drive mechanism as a second alternative comprises a curvature spindle and a curvature spindle nut, cooperating with the curvature spindle, wherein the curvature spindle nut is rotatably supported and held in place by the main plate, and the curvature spindle nut is rotatably driven by the curvature electric motor, and wherein the curvature spindle is connected to and drives the adjusting member.

Preferably, the position drive mechanism further comprises a position reduction gear, arranged between the position electric motor and the position toothed rack or the position spindle nut; and/or the curvature drive mechanism further comprises a curvature reduction gear, arranged between the curvature electric motor and the curvature toothed rack or the curvature spindle nut.

### 4. Short description of the drawings

In the following, preferred embodiments of the invention are disclosed by reference to the accompanying figures, in which shows:
- Fig. 1A: a schematic front view of an embodiment of a lumbar support for a vehicle seat according to the invention;
- Fig. 1B: a schematic back view of the lumbar support of Fig. 1A;
- Fig. 2A to 2C: schematic side views of the embodiment of Fig. 1A in different adjustment states;
- Fig. 3A to 3C: schematic side views of different embodiments of a lumbar support for a vehicle seat according to the invention having different actuation shapes;
- Fig. 4A: a three-dimensional view of the front side of an embodiment of a lumbar support for a vehicle seat according to the invention;
- Fig. 4B: a three-dimensional view of the back side of the lumbar support of Fig. 4A;
- Fig. 5: a three-dimensional detailed view of the drive mechanisms of the lumbar support of Fig. 4A without a cover;
- Fig. 6A: a three-dimensional view of the front sides of the lumbar support of Fig. 4A with a lumbar plate removed;
- Fig. 6B: a three-dimensional detailed view of the front side of the lumbar support of Fig. 6A;
- Fig. 7A to 7C: back views of an embodiment of a lumbar support for a vehicle seat according to the invention in different adjustment positions with a lumbar plate removed; and
- Fig. 8: a schematic side sectional view of a vehicle seat with an embodiment of a lumbar support according to the invention.

### 5. Description of preferred embodiments

In the following preferred embodiments of the invention are described with respect to the figures.

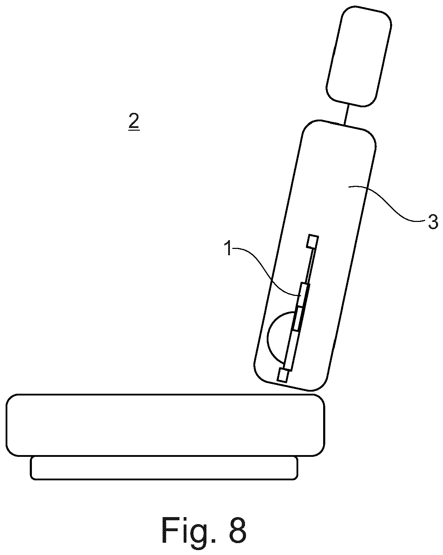

A vehicle seat 2 with a lumbar support 1 arranged within a backrest 3 is shown in Fig. 8.

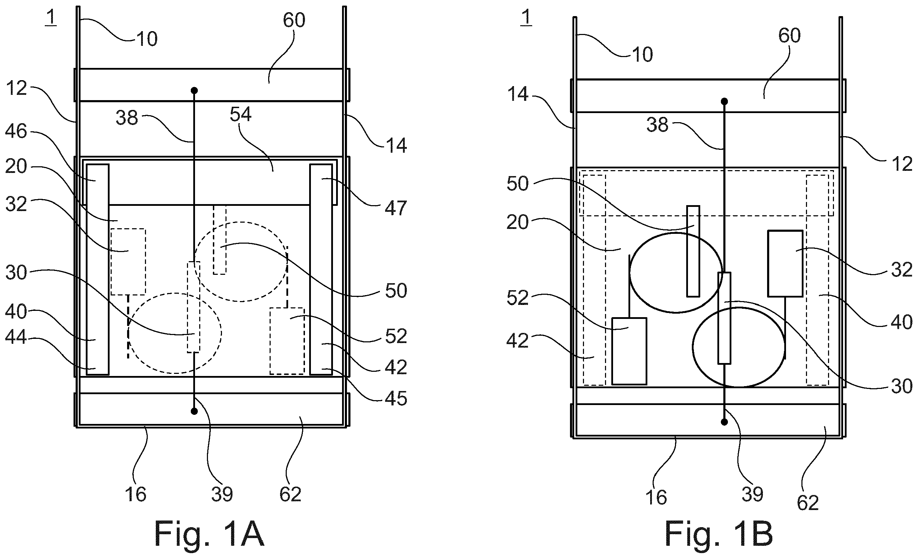

Fig. 1A and 1B show a schematic front and back side view of an embodiment of a lumbar support 1 for a backrest 3 of a vehicle seat 2 according to the invention. The lumbar support 1 comprises a wire structure 10, a main plate 20, a position drive mechanism 30, two arching elements 40, 42 and a curvature drive mechanism 50. The lumbar support 1 further comprises at the front side a flexible lumbar plate 90, that is not shown in Figs. 1A and 1B.

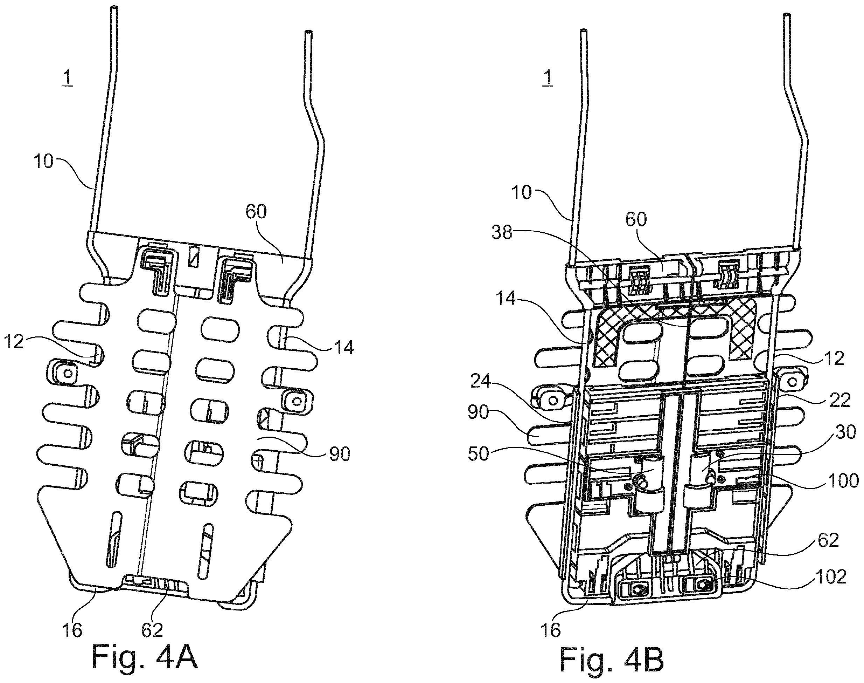

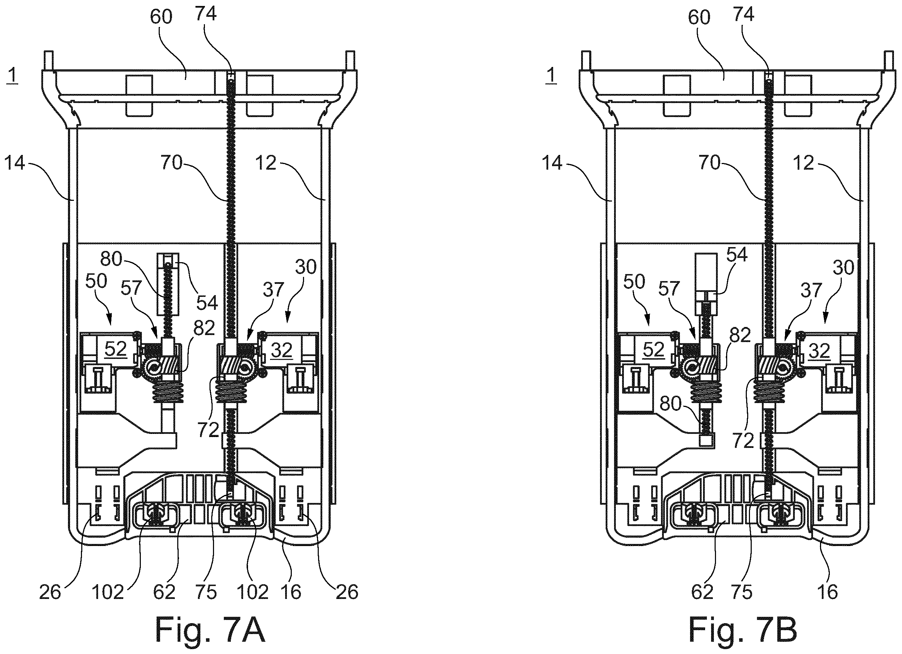

The wire structure 10 comprises a left guide member 12, a right guide member 14 and a lower wire member 16, which are all formed from an integral metal wire having a round section, the left guide member 12 and the right guide member 14 have at least portions that are parallel to each other and form as an attachment portion for the main plate 20. The lower wire member 16 connects the left and right guide members 12, 14 with each other and serves as a connection area for a second mounting element 62. At the upper area of the lumbar support 1 a first mounting element 60 connects the left and right guide members 12, 14 with each other to form a substantially rigid frame of the lumbar support 1. The lumbar support 1 is mounted within a frame of the backrest by the guide members 12, 14 and by connection elements 102 (see Fig. 4B and 7A) that are, as an example, clipped to the second mounting element 62.

The main plate 20 carries the two arching elements 40, 42, the curvature drive mechanism 50 and the position drive mechanism 30. The main plate 20 is preferably made of a plastic material and is supported by the left and right guide members 12, 14 to be linearly movable up and down with respect to the wire guide members 12, 14.

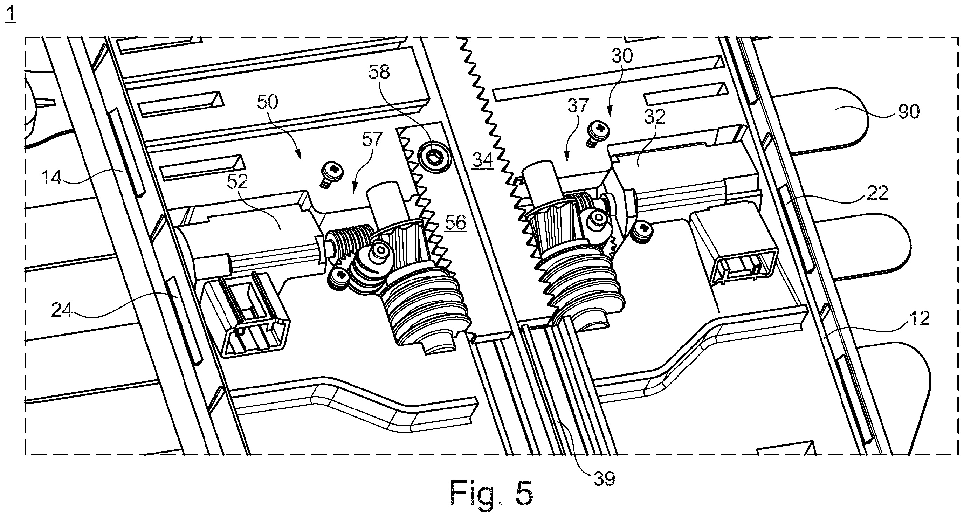

Preferably, as shown in Figs. 4B and 5 the main plate 20 is clipped to the left and right guide members 12, 14 by bearing receptacles 22, 24 (see Fig. 4B and 5) at the lateral sides thereof. The bearing receptacles 22, 24 are designed and dimensioned to fix the main plate 20 to left and right guide members 12, 14 but allow that the main plate 20 to be linearly movable up and down along the guide members 12, 14 with low friction.

The movement of the main plate 20 is electrically actuated by the position drive mechanism 30. The position drive mechanism 30 comprises a position electric motor 32 that is mounted to the main plate 20 and effects the movement of the main plate 20 in respect to the wire structure 10. The position drive mechanism 30 is further connected to the first and second mounting element 60, 62, which act as fixed points. In the embodiment of Fig. 1A and 1B the connection is made by upper and lower flexible wire portions 38, 39 as will be explained in more detail below. Instead of the flexible wire portions 38, 39 the position drive mechanism 30 could be rigidly connected to one of the first and second mounting elements 60, 62 by a substantially stiff connection link (not shown).

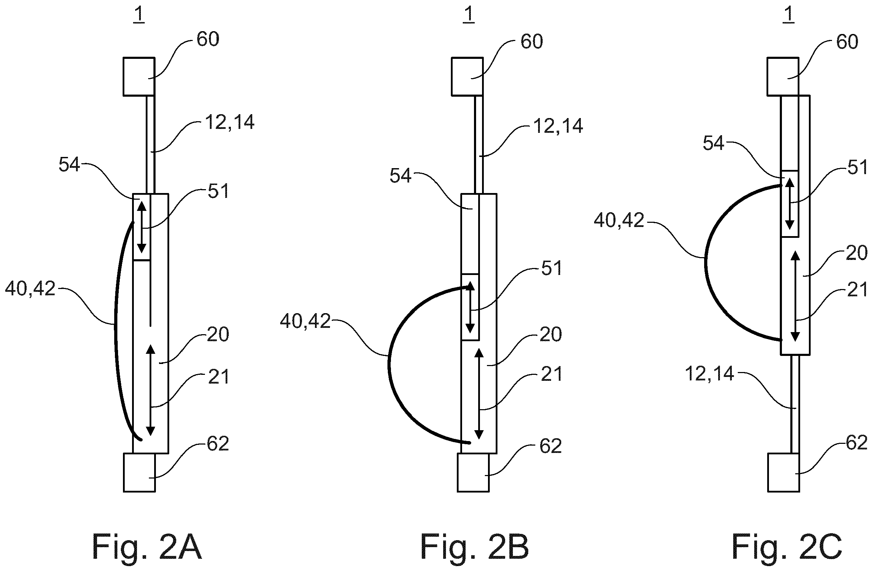

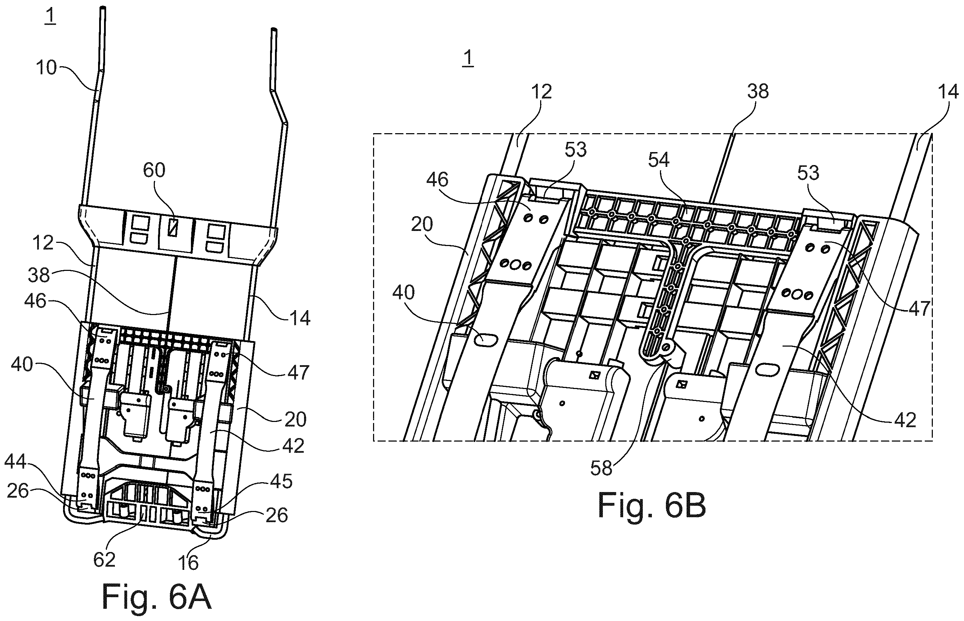

The curvature or "thickness" of the lumbar support 1 is adjusted by the at least one arching element 40, 42. In the embodiment of Fig. 1A and Fig. 2 a left arching element 40 and a right arching element 42 are supported by the main plate 20 at lateral front areas thereof. The arching elements 40, 42 determine the shape of a flexible lumbar plate 90 that is arranged in front of the arching elements 40, 42, (see Fig. 4A). First ends 44, 45 of the arching elements 40, 42 are attached to the main plate 20 at corresponding receptacles 26 (see Fig. 6A and 7A). The first ends 44, 45 of the arching elements 40, 42 are preferably clipped to the receptacles 26 such that they can still rotate to a certain extend around a horizontal axis. This reduces the force needed for bending the arching elements 40, 42. Second ends 46, 47 of the arching elements 40, 42 are attached to an adjusting member 54 that is movably supported by the main plate 20. Similar to the first ends 44, 45, the second ends 46, 47 of the arching elements 40, 42 are preferably clipped to receptacles 53 at the adjusting member 54 such that they can still rotate to a certain extend around a horizontal axis.

The adjusting member 54 is movably supported by the main plate 20 to adjust the distance between the receptacles 53 at the adjusting member 54 and the receptacles 26 at the main plate 20 to bend or flex the arching elements 40, 42. The movement of the adjusting member 54 is electrically actuated by the curvature drive mechanism 50. The curvature drive mechanism 50 comprises a curvature electric motor 52 that is mounted to the main plate 20 which effects the movement of the adjusting member 54.

The adjustment of the lumbar support 1 is shown in Figs. 2A to 2C that show extreme adjustment positions of the lumbar support 1. Of course, it is possible to adjust the lumbar support 1 to any intermediate position between theses extreme positions, as desired by the occupant.

Fig. 2A shows a position where the arching elements 40, 42 are at the lowest position and has the smallest curvature. To this end the main plate 20 is moved by the position drive mechanism 30, see arrow 21, to the lowest possible position at the wire guide members 12, 14. The adjusting member 54 is moved by the curvature drive mechanism 50, see arrow 51, to the highest possible position.

Fig. 2B shows a position where the arching elements 40, 42 are at the lowest position and have the maximum curvature. From the position of Fig. 2A the adjusting member 54 is moved by the curvature drive mechanism 50, see arrow 51, to the lowest possible position such that the arching elements 40, 42 are bent to the maximum extend.

Fig. 2C shows a position where the arching elements 40, 42 are at the highest position and have the maximum curvature. From the position of Fig. 2B the main plate 20 is moved by the position drive mechanism 30, see arrow 21, to the highest possible position at the wire guide members 12, 14.

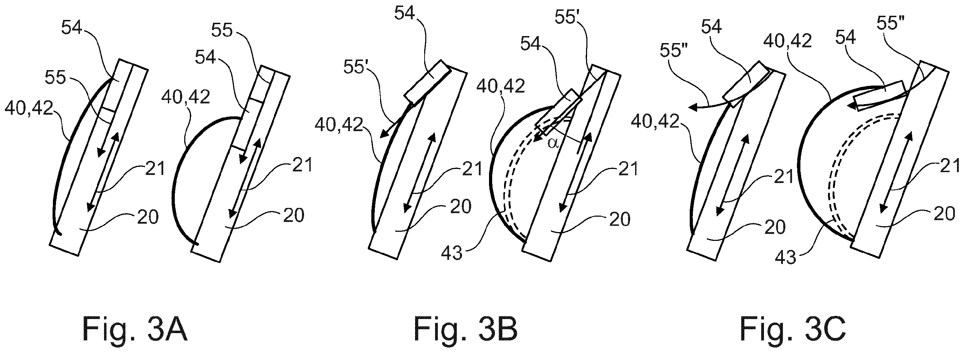

In the embodiment of Figs. 2A to 2B the adjusting member 54 moves linearly and in parallel to the linear movement of the main plate 20, see arrows 51 and 21. However, as shown in Figs. 3A to 3C the movement path 55 of the adjusting member 54 can be changed to adjust the actuation behavior and/or the shape of the arching elements 40, 42. This allows to adjust the actuation behavior and/or the shape of the lumbar support 1 overall.

In Fig. 3A the movement path 55 of the adjusting member 54 is arranged linearly and in parallel to the movement, see arrow 21, of the main plate 20. This corresponds to the actuation behavior and/or the shape of the lumbar support 1 of the embodiments of Figs. 2A to 2C.

In Fig. 3B the movement path 55' of the adjusting member 54 is arranged linearly and inclined by an angle α with respect to the movement, see arrow 21, of the main plate 20. By this arrangement the adjusting member 54 moves downward and simultaneously away from the plane of the main plate 20. Thus, the curvature of the arching elements 40, 42 increases incrementally, when the adjustment member 54 is moved, which provides an increased thickness of the lumbar support. Thus, compared to the standard maximum arching element profile 43 of a linear and parallel movement path 55 an even higher profile of the arching elements 40, 42 can be selected. In addition or alternatively the same standard maximum arching element profile 43 of the embodiment of Fig. 3A can be achieve with a smaller movement of the adjusting member 54. Thus, the lumbar support 1 can be actuated faster compared to the embodiment of Fig. 3A.

In Fig. 3C the movement path 55" adjusting member 54 is curved with respect to the movement of the main plate 20, particularly exponentially curved. Thus, the adjusting member 54 moves on a curved track or on an exponential track, such that the curvature of the arching elements 40, 42 can increase at a higher rate, even exponentially compared to the embodiment of Fig. 3B. Thus, compared to the standard maximum arching element profile 43 an even higher profile of the arching elements 40, 42 can be selected and/or the lumbar support 1 can be actuated faster to the same curvature compared to the embodiments of Fig. 3A and 3B.

The position drive mechanism 30 and the curvature drive mechanism 50 can be provided in different ways. The Figs. 4A to 6B show a further embodiment of a lumbar support 1 that uses rack gears for the position drive mechanism 30 and the curvature drive mechanism 50. The position drive mechanism 30 and the curvature drive mechanism 50 are preferably located on the back side of the main plate 20 and are covered by a cover 100, as shown in Fig. 4B. To the front the lumbar support 1 comprises the flexible lumbar plate 90 that covers the main plate 20 with the arching elements 40, 42. The shape of the lumbar plate 90 is determined by the position and curvature of the arching elements 40, 42. The lumbar plate 90 allows positioning of the main plate 20 and bending the arching elements 40, 42 within the backrest 3 without the need of high forces as it reduces the friction.

As shown in detail in Fig. 5 the rotation motion of the position electric motor 32 is transmitted via a position reduction gear 37, comprising of two cooperating worm gears, to a position toothed rack 34. When the position electric motor 32 is activated, the speed of rotation is highly reduced by the position reduction gear 37 that cooperates with the position toothed rack 34. The position toothed rack 34 is fixed to the first mounting element 60 by means of an upper flexible wire portion 38 (see Fig. 4B) and fixed to the second mounting element 62 by means of a lower flexible wire portion 39 (see Fig. 1A and 1B). Thus, the position toothed rack 34 maintains its vertical position with respect to the wire structure 10, whereas the main plate 20 moves up or down when the position electric motor 32 is activated. Thereby, the position toothed rack 34 linearly moves with respect to the main plate 20.

The upper flexible wire portion 38 and the lower flexible wire portion 39 can be separate wires connected to the position toothed rack 34 or they can be portions of one common flexible wire that extends through or along the position toothed rack 34.

Preferably the upper and lower flexible wire portions 38, 39 are made of a flexible steel wire. However, the upper and lower flexible wire portions 38, 39 could also be made of a flexible but tear resistant plastic material. Preferably, the upper and lower flexible wire portions 38, 39 are integrally produced together with the position toothed rack 34 from an injection molded plastic material.

As also shown in Fig. 5 the rotation of the curvature electric motor 52 is transmitted via a curvature reduction gear 57, comprising of two cooperating worm gears, to a curvature toothed rack 56. When the curvature electric motor 52 is activated, the speed of rotation is highly reduced by the curvature reduction gear 57 that cooperates with the curvature toothed rack 56. The curvature toothed rack 56 moves linearly with respect to the main plate 20 and transmits this linear movement to the adjusting member 54. Particularly, the toothed rack 56 comprises an opening that receives a connection pin 58 of the preferably T-shaped adjusting member 54 which is supported on the opposite, front side of the main plate 20. Thus, the adjusting member 54 is driven by the curvature toothed rack 56. By providing some play between the connection pin 58 and the opening in the curvature toothed rack 56 the different movement paths 55 of the adjusting member can be selected. The adjusting member 54 can be T-shaped, to easily transmit a pulling force of the single curvature toothed rack 56 to the left and right arching elements 40, 42, wherein the toothed rack 56 is supported at a lower vertical height on the main plate 20 than the upper second ends 46, 47 of the arching elements 42, 42.

The Figs. 7A to 7D show a further embodiment of a lumbar support 1 that uses spindle gears for the position drive mechanism 30 and the curvature drive mechanism 50. Apart from this difference the lumbar support 1 corresponds to the lumbar supports 1 as described above.

In this embodiment the rotation motion of the position electric motor 32 is transmitted via a position reduction gear 37, that comprises a worm gear, to a position spindle nut 72. The position spindle nut 72 is rotatably driven by the reduction gear 37 and held in place by the main plate 20. The position spindle nut 72 cooperates with a position spindle 70 that is screwed into the position spindle nut 72. The position spindle 70 is preferably flexible to some extend to comply with bending movements of the overall lumbar support 1 within the backrest 3. The position spindle 70 mounted at its upper end 74 thereof non-rotatably to the first mounting element 60 and at its lower end 75 thereof non-rotatably to the second mounting element 62. Thus, the position spindle 70 is substantially stationary with respect to the wire structure.

When the position electric motor 32 is activated, the speed of rotation is highly reduced by the position reduction gear 37 that drives the position spindle nut 72. By the rotation of the position spindle nut 72 the main plate 20 moves up or down with respect to the wire structure 10.

The rotation motion of the curvature electric motor 52 is transmitted via a curvature reduction gear 57, that comprises a worm gear, to a curvature spindle nut 82. The curvature spindle nut 82 is rotatably driven by the reduction gear 57 and held in place by the main plate 20. The curvature spindle nut 82 cooperates with a curvature spindle 80 that is screwed into the curvature spindle nut 82. The curvature spindle 80 is connected to the adjusting member 54 and moves the adjusting member 54 up or down with respect to the main plate 20 when the curvature electric motor 52 is activated. In this embodiment, the adjusting member 50 may be band shaped instead of being T-shaped. The curvature spindle 80 is preferably flexible to some extend to allow different movement paths 55 of the adjusting member 54 as shown in Fig. 3A to 3C.

Preferably, the curvature spindle 80 and the position spindle 70 can be made of an injection molded plastic material. Such spindles 70, 80 are flexible in the required extend but simultaneously are rigid enough to easily cooperate with the respective spindle nuts 72, 82 and to transmit the required pulling or pushing forces.

Fig. 7A to 7C show extreme adjustment positions of the lumbar support 1. Of course, it is possible to adjust the lumbar support 1 to any intermediate position between theses extreme positions, as desired by the occupant.

Fig. 7A shows a position where the arching elements 40, 42 are at the lowest position and have the smallest curvature. To this end the main plate 20 is moved by the position electric motor 32, the position reduction gear 37, the position spindle nut 72 and the position spindle 70 to the lowest possible position at the wire guide members 12, 14. The adjusting member 54 is moved by the curvature electric motor 52, the curvature reduction gear 57, the curvature spindle nut 82 and the curvature spindle 80 to the highest possible position.

Fig. 7B shows a position where the arching elements 40, 42 are at the lowest position and have the maximum curvature. From the position of Fig. 7A the adjusting member 54 is moved by the curvature drive mechanism 50 to the lowest possible position such that the arching elements 40, 42 are bent to the maximum extend.

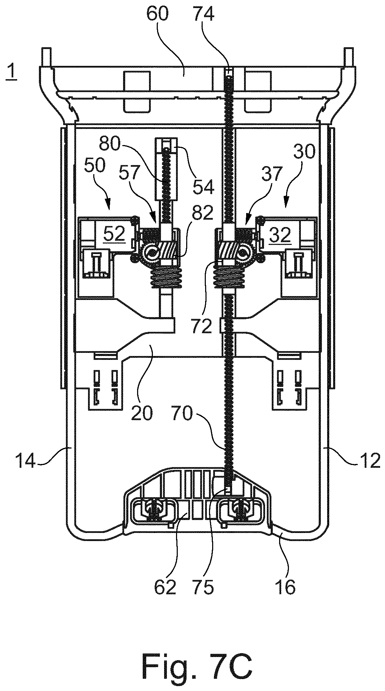

Fig. 7C shows a position where the arching elements 40, 42 are at the highest position and have the minimum curvature. From the position of Fig. 7A the main plate 20 is moved by the position drive mechanism 30, to the highest possible position at the wire guide members 12, 14.

Although not explicitly shown in the figures, the alternative features of the position adjustment mechanism can be combined to different alternative features of the curvature adjustment mechanism, as long as they fall within the scope defined by the claims. For example, the position adjustment with toothed rack 34 can be combined with a curvature adjustment with curvature spindle 80 and curvature spindle nut 82. In another example the position adjustment with the position spindle 70 and position spindle nut 72 can be combined with a curvature adjustment with curvature toothed rack 56.

### List of reference signs:

- 1: lumbar support
- 2: vehicle seat
- 3: backrest
- 10: wire structure
- 12: left guide member
- 14: right guide member
- 16: lower wire member
- 20: main plate
- 21: arrow
- 22, 24: bearing receptacles
- 26: receptacles for arching element
- 30: position drive mechanism
- 32: position electric motor
- 34: position toothed rack
- 37: position reduction gear
- 38: upper flexible wire portion
- 39: lower flexible wire portion
- 40: left arching element
- 42: right arching element
- 44, 45: first ends of arching elements
- 46, 47: second ends of arching elements
- 43: standard maximum arching element profile
- 50: curvature drive mechanism
- 51: arrow
- 52: curvature electric motor
- 54: adjusting member
- 55: path of adjusting member
- 56: curvature toothed rack
- 57: curvature reduction gear
- 58: connection pin
- 60: first mounting element
- 62: second mounting element
- 70: position spindle
- 72: position spindle nut
- 74: upper end of position spindle
- 75: lower end of position spindle
- 80: curvature spindle
- 82: curvature spindle nut
- 90: lumbar plate
- 100: cover
- 102: connection elements

## Claims

1. Lumbar support (1) for a backrest (3) of a vehicle seat (2) comprising:
a. a wire structure (10), having a pair of wire guide members (12, 14), for mounting the lumbar support (1) within the vehicle seat (2);
b. a main plate (20), supported by the wire guide members (10, 12), wherein the main plate (20) is linearly movable with respect to the wire guide members (10, 14);
c. a position drive mechanism (30), for linearly moving the main plate (20) with respect to the wire structure (10), wherein the main drive mechanism (30) comprises a position electric motor (32) which is mounted to the main plate (20);
d. a curvature drive mechanism (50), comprising an adjusting member (54);
e. at least one arching element (40, 42) suspended between the main plate (20) and the adjusting member (54); and
f. a curvature electric motor (52) mounted to the main plate (20), for moving the adjusting member (54) to adjust the curvature of the at least one arching element (40, 42); **characterized in that**
g. the adjusting member (54) is supported by the main plate (20) and movable with respect to the main plate (20).

2. Lumbar support according to claim 1, wherein the at least one arching element (40, 42) comprises a first end (44, 45) and a second end (46, 47), wherein the first end (44, 45) is attached to the main plate (20) and the second end (46, 47) is attached to the adjusting member (54).

3. Lumbar support according to claim 2, wherein the adjusting member (54) is movably supported by the main plate (20) to be movable:
a. linearly and in parallel with respect to the movement (21) of the main plate (20); or
b. linearly and inclined by an angle (a) with respect to the movement (21) of the main plate (20); or
c. on a curved track (55") with respect to the movement of the main plate (20); or
d. on a curved exponential track (55") with respect to the movement of the main plate (20).

4. Lumbar support according to one of the claims 1 to 3, wherein the adjusting member (54) has a substantially T-shape.

5. Lumbar support according to one of the claims 1 to 4, comprising two arching elements (40, 42), namely a left arching element (40) and a right arching element (42), wherein the left and right arching elements (40, 42) are supported by the main plate (20) and the adjusting member (54) to be in parallel to each other, and wherein the left and right arching elements (40, 42) are supported by the main plate (20) at first ends (44, 45) thereof and are commonly actuated by the adjusting member (54) at second ends (46, 47) thereof.

6. Lumbar support according to one of the claims 1 to 5, wherein the position drive mechanism (30) further comprises a position toothed rack (34) that is movably supported by the main plate (20) and driven by the position electric motor (32).

7. Lumbar support according to claim 6, wherein:
a. the wire structure (10) further comprises at least one mounting element (60, 62), connected to the wire structure (10); and
b. the position drive mechanism (30) further comprises at least one connection link (38, 39) for connecting the position toothed rack (34) with the at least one mounting element (60, 62).

8. Lumbar support according to claim 7, wherein the wire structure (10) comprises two mounting elements (60, 62) connected to the wire structure (10), and the curvature drive mechanism (30) comprises an upper flexible wire portion (38) of the connection link (38, 39), connecting the position toothed rack (34) with the first mounting element (60), and a lower flexible wire portion (39) of the connection link (38, 39) connecting the position toothed rack (34) with the second mounting element (62).

9. Lumbar support according to claim 8, wherein:
a. the first mounting element (60) extends between and connects the left wire guide member (12) and the right wire guide member (14); and/or
b. the second mounting element (62) is connected to a lower wire element (16) of the wire structure (10).

10. Lumbar support according to one of the claims 1 to 5, wherein:
a. the position drive mechanism (30) further comprises a position spindle (70) and a position spindle nut (72) cooperating with the position spindle (70); wherein
b. the position spindle nut (72) is rotatably supported and held in place by the main plate (20), wherein the position spindle nut (72) is rotatably driven by the position electric motor (32); and
c. the position spindle (70) is arranged stationary with respect to the wire structure (10).

11. Lumbar support according to claim 10, wherein the wire structure (10) further comprises at least one mounting element (60, 62), connected to the wire structure (10), wherein the position spindle (70) with one end (74, 75) thereof, is non-rotatably connected to the mounting element (60, 62).

12. Lumbar support according to claim 11, wherein the wire structure (10) comprises two mounting elements (60, 62) connected to the wire structure (10), namely a first mounting element (60) and a second mounting element (62), wherein the position spindle (70) with one end (74) thereof, is non-rotatably connected to the first mounting element (60) and the position spindle (70) with the other end (75) thereof, is non-rotatably connected to the second mounting element (62).

13. Lumbar support according to one of the claims 1 to 12, wherein the curvature drive mechanism (50) further comprises a curvature toothed rack (56), which is movably supported by the main plate (20) and driven by the curvature electric motor (52), wherein the curvature toothed rack (56) is connected to and drives the adjusting member (54).

14. Lumbar support according to one of the claims 1 to 12, wherein the curvature drive mechanism (50) further comprises a curvature spindle (80) and a curvature spindle nut (82), cooperating with the curvature spindle (80), wherein the curvature spindle nut (82) is rotatably supported and held in place by the main plate (20), and the curvature spindle nut (82) is rotatably driven by the curvature electric motor (52), and wherein the curvature spindle (80) is connected to and drives the adjusting member (54).

15. Lumbar support according to one of the claims 6 to 14, wherein:
a. the position drive mechanism (30) further comprises a position reduction gear (37), arranged between the position electric motor (32) and the position toothed rack (54) or the position spindle nut (72); and/or
b. the curvature drive mechanism (50) further comprises a curvature reduction gear (57), arranged between the curvature electric motor (52) and the curvature toothed rack (56) or the curvature spindle nut (82).

## Patentansprüche

1. Lendenstütze (1) für eine Rückenlehne (3) eines Fahrzeugsitzes (2), umfassend:
a. eine Drahtstruktur (10) mit einem Paar von Drahtführungselementen (12, 14) zum Montieren der Lendenstütze (1) innerhalb des Fahrzeugsitzes (2);
b. eine Hauptplatte (20), die von den Drahtführungselementen (10, 12) gestützt wird, wobei die Hauptplatte (20) in Bezug auf die Drahtführungselemente (10, 14) linear beweglich ist;
c. einen Positionsantriebsmechanismus (30) zum linearen Bewegen der Hauptplatte (20) in Bezug auf die Drahtstruktur (10), wobei der Hauptantriebsmechanismus (30) einen Positionselektromotor (32) umfasst, der an der Hauptplatte (20) montiert ist;
d. einen Krümmungsantriebsmechanismus (50), der ein Einstellelement (54) umfasst;
e. mindestens ein Wölbungselement (40, 42), das zwischen der Hauptplatte (20) und dem Einstellelement (54) aufgehängt ist; und
f. einen Krümmungselektromotor (52), der an der Hauptplatte (20) montiert ist, zum Bewegen des Einstellelements (54), um die Krümmung des mindestens einen Wölbungselements (40, 42) einzustellen; **dadurch gekennzeichnet, dass**
g. das Einstellelement (54) von der Hauptplatte (20) gestützt wird und in Bezug auf die Hauptplatte (20) beweglich ist.

2. Lendenstütze nach Anspruch 1, wobei das mindestens eine Wölbungselement (40, 42) ein erstes Ende (44, 45) und ein zweites Ende (46,47) umfasst, wobei das erste Ende (44, 45) an der Hauptplatte (20) befestigt ist und das zweite Ende (46, 47) an dem Einstellelement (54) befestigt ist.

3. Lendenstütze nach Anspruch 2, wobei das Einstellelement (54) von der Hauptplatte (20) beweglich gestützt wird, um beweglich zu sein:
a. linear und parallel in Bezug auf die Bewegung (21) der Hauptplatte (20); oder
b. linear und um einen Winkel (a) in Bezug auf die Bewegung (21) der Hauptplatte (20) geneigt; oder
c. auf einer gekrümmten Bahn (55") in Bezug auf die Bewegung der Hauptplatte (20); oder
d. auf einer gekrümmten Exponentialbahn (55") in Bezug auf die Bewegung der Hauptplatte (20).

4. Lendenstütze nach einem der Ansprüche 1 bis 3, wobei das Einstellelement (54) eine im Wesentlichen T-Form aufweist.

5. Lendenstütze nach einem der Ansprüche 1 bis 4, umfassend zwei Wölbungselemente (40, 42), nämlich ein linkes Wölbungselement (40) und ein rechtes Wölbungselement (42), wobei das linke und das rechte Wölbungselement (40, 42) von der Hauptplatte (20) und dem Einstellelement (54) gestützt werden, um parallel zueinander zu sein, und wobei das linke und das rechte Wölbungselement (40, 42) von der Hauptplatte (20) an ersten Enden (44, 45) davon gestützt werden und gemeinsam von dem Einstellelement (54) an zweiten Enden (46, 47) davon betätigt werden.

6. Lendenstütze nach einem der Ansprüche 1 bis 5, wobei der Positionsantriebsmechanismus (30) ferner eine Positionszahnstange (34) umfasst, die von der Hauptplatte (20) beweglich gestützt wird und von dem Positionselektromotor (32) angetrieben wird.

7. Lendenstütze nach Anspruch 6, wobei:
a. die Drahtstruktur (10) ferner mindestens ein Montageelement (60, 62) umfasst, das mit der Drahtstruktur (10) verbunden ist; und
b. der Positionsantriebsmechanismus (30) ferner mindestens ein Verbindungsglied (38, 39) zum Verbinden der Positionszahnstange (34) mit dem mindestens einen Montageelement (60, 62) umfasst.

8. Lendenstütze nach Anspruch 7, wobei die Drahtstruktur (10) zwei Montageelemente (60, 62) umfasst, die mit der Drahtstruktur (10) verbunden sind, und der Krümmungsantriebsmechanismus (30) einen oberen flexiblen Drahtabschnitt (38) des Verbindungsglieds (38, 39) umfasst, der die Positionszahnstange (34) mit dem ersten Montageelement (60) verbindet, und einen unteren flexiblen Drahtabschnitt (39) des Verbindungsglieds (38, 39), der die Positionszahnstange (34) mit dem zweiten Montageelement (62) verbindet.

9. Lendenstütze nach Anspruch 8, wobei:
a. sich das erste Montageelement (60) zwischen dem linken Drahtführungselement (12) und dem rechten Drahtführungselement (14) erstreckt und diese verbindet; und/oder
b. das zweite Montageelement (62) mit einem unteren Drahtelement (16) der Drahtstruktur (10) verbunden ist.

10. Lendenstütze nach einem der Ansprüche 1 bis 5, wobei:
a. der Positionsantriebsmechanismus (30) ferner eine Positionsspindel (70) und eine Positionsspindelmutter (72) umfasst, die mit der Positionsspindel (70) zusammenwirkt; wobei
b. die Positionsspindelmutter (72) von der Hauptplatte (20) drehbar gestützt und an Ort und Stelle gehalten wird, wobei die Positionsspindelmutter (72) von dem Positionselektromotor (32) drehbar angetrieben wird; und
c. die Positionsspindel (70) in Bezug auf die Drahtstruktur (10) stationär angeordnet ist.

11. Lendenstütze nach Anspruch 10, wobei die Drahtstruktur (10) ferner mindestens ein Montageelement (60, 62) umfasst, das mit der Drahtstruktur (10) verbunden ist, wobei die Positionsspindel (70) mit einem Ende (74, 75) davon mit dem Montageelement (60, 62) drehfest verbunden ist.

12. Lendenstütze nach Anspruch 11, wobei die Drahtstruktur (10) zwei Montageelemente (60, 62) umfasst, die mit der Drahtstruktur (10) verbunden sind, nämlich ein erstes Montageelement (60) und ein zweites Montageelement (62), wobei die Positionsspindel (70) mit einem Ende (74) davon mit dem ersten Montageelement (60) drehfest verbunden ist und die Positionsspindel (70) mit dem anderen Ende (75) davon mit dem zweiten Montageelement (62) drehfest verbunden ist.

13. Lendenstütze nach einem der Ansprüche 1 bis 12, wobei der Krümmungsantriebsmechanismus (50) ferner eine Krümmungszahnstange (56) umfasst, die von der Hauptplatte (20) beweglich gestützt wird und von dem Krümmungselektromotor (52) angetrieben wird, wobei die Krümmungszahnstange (56) mit dem Einstellelement (54) verbunden ist und dieses antreibt.

14. Lendenstütze nach einem der Ansprüche 1 bis 12, wobei der Krümmungsantriebsmechanismus (50) ferner eine Krümmungsspindel (80) und eine Krümmungsspindelmutter (82) umfasst, die mit der Krümmungsspindel (80) zusammenwirkt, wobei die Krümmungsspindelmutter (82) von der Hauptplatte (20) drehbar gestützt und an Ort und Stelle gehalten wird und die Krümmungsspindelmutter (82) von dem Krümmungselektromotor (52) drehbar angetrieben wird und wobei die Krümmungsspindel (80) mit dem Einstellelement (54) verbunden ist und dieses antreibt.

15. Lendenstütze nach einem der Ansprüche 6 bis 14, wobei:
a. der Positionsantriebsmechanismus (30) ferner ein Positionsuntersetzungsgetriebe (37) umfasst, das zwischen dem Positionselektromotor (32) und der Positionszahnstange (54) oder der Positionsspindelmutter (72) angeordnet ist; und/oder
b. der Krümmungsantriebsmechanismus (50) ferner ein Krümmungsuntersetzungsgetriebe (57) umfasst, das zwischen dem Krümmungselektromotor (52) und der Krümmungszahnstange (56) oder der Krümmungsspindelmutter (82) angeordnet ist.

## Revendications

1. Support lombaire (1) pour un dossier (3) d'un siège de véhicule (2), comprenant :
a. une structure de fils (10) possédant une paire d'organes de guidage de fil (12, 14), pour le montage du support lombaire (1) sur le siège de véhicule (2) ;
b. une plaque principale (20) supportée par les organes de guidage de fil (10, 12), la plaque principale (20) étant mobile linéairement par rapport aux organes de guidage de fil (10, 14) ;
c. un mécanisme d'entraînement de positionnement (30) pour déplacer linéairement la plaque principale (20) par rapport à la structure de fils (10), le mécanisme d'entraînement principal (30) comprenant un moteur électrique de positionnement (32) qui est monté sur la plaque principale (20) ;
d. un mécanisme d'entraînement de courbure (50), comprenant un organe d'ajustement (54) ;
e. au moins un élément de cintrage (40, 42) suspendu entre la plaque principale (20) et l'organe d'ajustement (54) ; et
f. un moteur électrique de courbure (52) monté sur la plaque principale (20), pour déplacer l'organe d'ajustement (50) pour ajuster la courbure de l'au moins un élément de cintrage (40, 42) ; **caractérisé en ce que**
g. l'organe d'ajustement (54) est supporté par la plaque principale (20) et est mobile par rapport à la plaque principale (20).

2. Support lombaire selon la revendication 1, dans lequel l'au moins un élément de cintrage (40, 42) comprend une première extrémité (44, 45) et une seconde extrémité (46, 47), la première extrémité (44, 45) étant assujettie à la plaque principale (20) et la seconde extrémité (46, 47) étant assujettie à l'organe d'ajustement (54).

3. Support lombaire selon la revendication 2, dans lequel l'organe d'ajustement (54) est supporté de manière mobile par la plaque principale (20) afin de pouvoir être déplacé :
a. linéairement et parallèlement au déplacement (21) de la plaque principale (20) ; ou
b. linéairement et avec une inclinaison d'un angle (α) par rapport au déplacement (21) de la plaque principale (20) ; ou
c. sur une trajectoire courbe (55") par rapport au déplacement de la plaque principale (20) ; ou
d. sur une trajectoire exponentielle courbe (55") par rapport au déplacement de la plaque principale (20).

4. Support lombaire selon l'une des revendications 1 à 3, dans lequel l'organe d'ajustement (54) a une forme sensiblement en T.

5. Support lombaire selon l'une des revendications 1 à 4, comprenant deux éléments de cintrage (40, 42), à savoir un élément de cintrage gauche (40) et un élément de cintrage droit (42), les éléments de cintrage droit et gauche (40, 42) étant supportés par la plaque principale et l'organe d'ajustement (54) pour être parallèle l'un à l'autre, et dans lequel les éléments de cintrage gauche et droit (40, 42) sont supportés par la plaque principale (20) à des premières extrémités (44, 45) de ceux-ci et sont actionnés en commun par l'organe d'ajustement (54) à des secondes extrémités (46, 47) de ceux-ci.

6. Support lombaire selon l'une des revendications 1 à 5, dans lequel le mécanisme d'entraînement de positionnement (30) comprend en outre une crémaillère dentée de positionnement (34), qui est supportée mobile par la plaque principale (20) et qui est entraînée par le moteur électrique de positionnement (32).

7. Support lombaire selon la revendication 6, dans lequel :
a. la structure de fils (10) comprend en outre au moins un élément de montage (60, 62) relié à la structure de fils (10) ; et
b. le mécanisme d'entraînement de positionnement (30) comprend en outre au moins une attache de liaison (38, 39) pour relier la crémaillère dentée de positionnement (34) à l'au moins un élément de montage (60, 62).

8. Support lombaire selon la revendication 7, dans lequel la structure de fils (10) comprend deux éléments de montage (60, 62) reliés à la structure de fils (10), et le mécanisme d'entraînement de courbure (30) comprend une partie de fil flexible supérieure (38) de l'attache de liaison (38, 39), reliant la crémaillère dentée de positionnement (34) au premier élément de montage (60), et une partie de fil flexible inférieure (39) de l'attache de liaison (38, 39), reliant la crémaillère dentée de positionnement (34) au second élément de montage (62).

9. Support lombaire selon la revendication 8, dans lequel :
a. le premier élément de montage (60) s'étend entre, et relie, l'organe de guidage de fil gauche (12) et l'organe de guidage de fil droit (14) ; et/ou
b. le second élément de montage (62) est relié à un élément de fil inférieur (16) de la structure de fils (10) .

10. Support lombaire selon l'une des revendications 1 à 5, dans lequel :
a. le mécanisme d'entraînement de positionnement (30) comprend en outre une tige filetée de positionnement (70) et un écrou de tige filetée de positionnement (72), coopérant avec la tige filetée de positionnement (70) ; dans lequel
b. l'écrou de tige filetée de positionnement (72) est supporté à rotation et maintenu en place par la plaque principale (20), l'écrou de tige filetée de positionnement (72) étant entraîné en rotation par le moteur électrique de positionnement (32) ; et
c. la tige filetée de positionnement (70) est agencée fixe par rapport à la structure de fils (10).

11. Support lombaire selon la revendication 10, dans lequel la structure de fils (10) comprend en outre au moins un élément de montage (60, 62) relié à la structure de fils (10), dans lequel la tige filetée de positionnement (70) avec une des ses extrémités (74, 75) est reliée à l'élément de montage (60, 62) sans possibilité de rotation.

12. Support lombaire selon la revendication 11, dans lequel la structure de fils (10) comprend deux éléments de montage (60, 62) reliés à la structure de fils (10), à savoir un premier élément de montage (60) et un second élément de montage (62), dans lequel la tige filetée de positionnement (70) avec une de ses extrémités (74) est reliée au premier élément de montage sans possibilité de rotation, et la tige filetée de positionnement (70) avec son autre extrémité (75) est reliée au second élément de montage (62) sans possibilité de rotation.

13. Support lombaire selon l'une des revendications 1 à 12, dans lequel le mécanisme d'entraînement de courbure (50) comprend en outre une crémaillère dentée de courbure (56) qui est supportée mobile par la plaque principale (20) et qui est entraînée par le moteur électrique de courbure (52), la crémaillère dentée de courbure (56) étant reliée à, et entraînant, l'organe d'ajustement (54).

14. Support lombaire selon l'une des revendications 1 à 12, dans lequel le mécanisme d'entraînement de courbure (50) comprend en outre une tige filetée de courbure (80) et un écrou de tige filetée de courbure (80), coopérant avec la tige filetée de courbure (80), l'écrou de tige filetée de courbure (82) étant supporté à rotation et maintenu en place par la plaque principale, et l'écrou de tige filetée de courbure (82) étant entraîné en rotation par le moteur électrique de courbure (52), et la tige filetée de courbure (80) étant reliée à, et entraînant, l'organe d'ajustement (54).

15. Support lombaire selon l'une des revendications 6 à 14, dans lequel :
a. le mécanisme d'entraînement de positionnement (30) comprend en outre un pignon de réduction de positionnement (37), agencé entre le moteur électrique de positionnement (32) et la crémaillère dentée de positionnement (54) ou l'écrou de tige filetée de positionnement (72) ; et/ou
b. le mécanisme d'entraînement de courbure (50) comprend en outre un pignon de réduction de courbure (57), agencé entre le moteur électrique de courbure (52) et la crémaillère dentée de courbure (56) ou l'écrou de tige filetée de courbure (82).
